# EUROPEAN PATENT APPLICATION

(11) **EP 1 519 367 A2**
(43) Date of publication of application: **30.03.2005**
(21) Application number: 04255858.5
(22) Date of filing: 24.09.2004
(51) Int. Cl.: G11B 7/0045

(54) **Information record apparatus and method, information record and reproduction apparatus and method, and computer program product**

(30) Priority: 26.09.2003 JP 2003334756
(71) Applicant: Pioneer Corporation, Meguro-ku, Tokyo (JP)
(72) Inventor: Sugiyama, Takakazu, c/o Pioneer Corporation, Tokorozawa-shi, Saitama (JP); Matsushita, Yoshinari, c/o Pioneer Corporation, Tokorozawa-shi, Saitama (JP); Ochi, Katsuaki, c/o Pioneer Corporation, Tokorozawa-shi, Saitama (JP); Masui, Ken, c/o Pioneer Corporation, Tokorozawa-shi, Saitama (JP); Tsudome, Hirohisa, c/o Pioneer Corporation, Tokorozawa-shi, Saitama (JP)
(74) Representative: Haley, Stephen

(57) **Abstract**

The information record apparatus is provided with: a record device for recording the information onto an information record medium by using laser light having controllable record power; a calibration device for obtaining a calibration value of the record power by recording calibration data to obtain the calibration value into a calibration area arranged in the information record medium to obtain the calibration value; and a first erase device for erasing a part of the calibration data recorded into the calibration area. Normal recording while erasing information in the calibration area is provided, which reduces buffer overflow problems.

## Description

The present invention relates to an information record apparatus and method (information record and reproduction apparatus and method), such as a DVD recorder, and relates to a computer program product to make a computer function as such an information record apparatus (information record and reproduction apparatus and method).

For example, in an information record and reproduction apparatus for recording information onto an information record medium such as an optical disc, the optimal record power is determined by an OPC (Optimum Power Control) process, depending on an optical disc type, an information record apparatus type, a record speed of the information record apparatus and so on. Namely, a calibration of the record power is performed. Thereby, an appropriate recording can be achieved accommodating with variations (fluctuations) in characteristics of an information record surface of the optical disc. For example, once the optical disc is loaded and a write command is inputted, OPC data is recorded into an OPC area with the light power being changed sequentially and stepwisely, so that a so-called "trial writing'' process is performed. Then, the OPC data recorded as such is reproduced, and the reproduction result is judged on the basis of a predetermined judgement basis, so that the calibration value of the record power (i.e. the optimal record power) is determined (see Japanese Patent Gazette No. 3159454).

In the case of performing the OPC process, however, an empty area of the OPC area is gradually decreased, since the OPC data is recorded into the OPC area. Therefore, the OPC data recorded into the OPC area must be once erased, in order to continue the OPC process. However, since a normal data recording stops or pauses during erasing the OPC area, a buffer to store the to-be-recorded data may be full, which may cause an overflow. This is a technical disadvantage. Specifically, in a so-called "DOUJIROKUSAI" type (simultaneously recording and reproduction type) information record and reproduction apparatus capable of recording and reproducing the data in parallel with each other, a capacity of the buffer sufficient to store the record data becomes relatively small, which makes the aforementioned disadvantage more remarkably.

The present invention has been accomplished in view of the above problems for example. It is therefore an object of the present invention to provide an information record apparatus and method allowing the normal recording of the information while performing the erase of the information recorded in the OPC area, and further to provide an information record and reproduction apparatus and method, and further to provide a computer program product to make a computer function as the information record apparatus and the information record and reproduction apparatus.

The above object of the present invention can be achieved by the information record apparatus comprising: a record device for recording information onto an information record medium with laser light having controllable record power; a calibration device for obtaining a calibration value of the record power by recording calibration data to obtain the calibration value, into a calibration area arranged in the information record medium to obtain the calibration value; and a first erase device for erasing a part of the calibration data recorded into the calibration area.

According to the information record apparatus of the present invention, it is possible to record video or audio information, or various contents information including data information for computer. On the other hand, the calibration device records the calibration data in the calibration area (e.g. a PCA (Power Calibration Area), discussed below) of the information record medium to obtain the calibration value of the record power. This "calibration value" may be a value of the record power optimal or substantially suitable to recode the information, or may be the difference value between the optimal or suitable power value and a record power value used at present to record the information.

Particularly in this information record apparatus, the first erase device erases a part of the calibration data recorded in the calibration area. More specifically, the calibration data recorded at every time when the record power is calibrated is not erased as a whole but erased by a predetermined amount. For example, if the calibration data is recorded using 80 % of the entire calibration area, the calibration data corresponding to 10 % (for example) of the recorded calibration data is erased to obtain an empty area corresponding to 8 % of the entire calibration area. Thus, even if the part is erased, the calibration data to perform a new calibration can be recorded for a predetermined period, since the data size of the calibration data to be recorded is relatively small.

In this case, it is assumed that the record device records the information onto the information record medium, after temporarily storing the information to be recorded in the buffer. Then, if the first erase device operates, the information may be continued to be stored in the buffer, since recording the information by the record device stops. As the result, a buffer overflow may adversely occur. In the information record apparatus of the present invention, however, since the calibration data recorded in the calibration area is partially erased, the operation time of the first erase device is relatively short. Therefore, a record stop time length can be relatively shortened, and thereby the adverse overflow can be avoided. Furthermore, since the workload of the first erase device is relatively small, the empty area of the calibration area can be obtained without seriously affecting on the recording operation of the record device and the like. Furthermore, when the workload of the record device is not great (or when the record device does not perform the information recording), the second erase device, as described later, may erase the calibration data overall of the calibration area, so that the empty area of the calibration data can be more effectively obtained.

The record power of the laser light used by the record device is controlled to be set to the calibration value (or the record power indicated by the calibration value) obtained by using the calibration area in which the empty area is constantly obtained as mentioned above. Thereby the operation of recording the information is performed with more suitable record power, resulting in the improvement of the record characteristics.

As the result, in the information record apparatus of the present invention, the information record apparatus can prevent appropriately the overflow of the record buffer, and can perform appropriately the erase of the calibration data recorded in the calibration area. Furthermore, it can record appropriately the information without seriously affecting the recording operation of the record device and the like.

In an aspect of the information record apparatus of the present invention, the information record apparatus further comprises: a record buffer for temporarily storing record data to record the information; and a first set device for setting a size of the part of the calibration data to be erased by the first erase device, on the basis of storage capacity of the record buffer.

According to this aspect, the first erase device can perform the erase operation, without affecting on the normal operation of recording the information (e.g. without causing the buffer overflow), since the size (or data amount) of the calibration data to be erased is set by the first set device in response to the storage capacity (or its size level) of the buffer. Incidentally, the first set device may set the size indirectly by setting the erase operation time length of the first erase device, even if the size is not directly set. Furthermore, the "record buffer storage capacity" herein is not only intended to indicate the data amount of the information recorded in the record buffer, but also used in a broad sense including the record buffer size. That is, the increase of the data amount of the information recorded in the record buffer (i.e. the decrease of the empty area of the record buffer) is substantially the same state as the decrease of the record buffer size. On the other hand, the decrease of the data amount of the information recorded in the record buffer (i.e. the increase of the empty area of the record buffer) is substantially the same state as the increase of the record buffer size.

As discussed above, in the aspect provided with the first set device, the information record apparatus may be arranged so that the first set device sets the size of the part of the calibration data to be erased by the first erase device, on the basis of a record speed when the information is recorded, instead of or in addition to the storage capacity of the record buffer.

In this arrangement, the part of the calibration data in the more suitable data amount can be erased, to an extent not to affect on the normal operation of recording the information, in appropriately taking account of the information record speed that may affect on the information recording operation, instead of or in addition to the aforementioned record buffer.

In another aspect of the information record apparatus of the present invention, the information record apparatus is further provided with a first judgement device for judging whether or not erasing is to be performed by the first erase device, wherein the first erase device erases the part of the calibration data, under a condition that the first judgement device judges that the erasing is to be performed.

According to this aspect, it is possible for the first erase device to perform the erase of the calibration data if needed, on the basis of the judgement of the first judgement device. For example, it may be judged that the first erase device should perform the erase operation, in a case that a workload of the record operation of the record device (or the information record apparatus) is small, or in a case that the workload does not seriously affect on the record operation of the record device (or the information record apparatus). For example in a case that the record operation stops, or before the start of the recording operation, etc, it may be judged that the first erase device should erase. Therefore, the calibration data is not erased unnecessarily and thereby a process performance of the information record apparatus can be improved.

Furthermore, if it is judged that the first erase device should perform the partial erase operation as appropriate, in a case that the workload of the information record apparatus is small, it is possible to obtain the same effect as the full erase of the second erase device as discussed below, by performing a plurality of times this partial erase operation.

In an aspect provided with the first judgement device, the information record apparatus may be arranged so that the first judgement device judges that the first erase device should perform erasing, if a size of an empty area into which the calibration data is not recorded in the calibration area is smaller than a first threshold value, on recording the information.

In this arrangement, the first erase device can perform the erase operation, in the case that the empty area is small for example, in response to the empty area size of the calibration area. Incidentally, the expression of "smaller than the first threshold value" may change the expression of same or smaller than the first threshold value". Therefore, the first erase device performs the erase operation in the case that the calibration data is truly required to be erased. The first erase device does not perform the erase operation, in the case that the empty area is sufficient not to particularly require erasing the calibration data. Thereby, the process performance can be improved, as mentioned above.

As the first threshold value, a value corresponding to a size allowing the calibration device to record the calibration data at least one time or at several time may be set, or a value corresponding to a size allowing the information record apparatus to record the information appropriately may be set, or a value corresponding to a record buffer size or a suitable size based on the record speed as mentioned below may be set.

In the aspect of the information record apparatus, in which the first judgement device judges whether or not the empty area size is smaller than the first threshold value, the information record apparatus may be further comprises: a record buffer for temporarily storing record data to record the information; and a second set device for setting the first threshold value, on the basis of a storage capacity of the record buffer.

In this arrangement, the first erase device can perform the erase operation to an extent not affecting on the normal operation of recording the information, if the second set device sets the first threshold value in response to the storage capacity (e.g. its size level) of the record buffer.

In the aspect provided with the second set device as mentioned above, the information record apparatus may be arranged so that the second set device sets the first threshold value, on the basis of a record speed when the information is recorded, instead of or in addition to the storage capacity of the record buffer.

In this arrangement, it is possible to judge whether or not the first erase device should perform the erase operation, on the basis of the first threshold value predetermined in appropriately taking account of the record speed of the information that may affect on the operation of recording the information, instead of or in addition to the aforementioned record buffer size.

In another aspect of the information record apparatus of the present invention, the information record apparatus further comprises: a second erase device for erasing the entire calibration data recorded into the calibration area.

According to this aspect, for example, the calibration data recorded in the calibration area as appropriate may be full-erased. Thereby, the number of times to erase the calibration data can be reduced, in comparison with the aspect provided with the first erase device only. Particularly, if the second erase device erases the entire calibration data, when the workload of the record device is small, e.g. in a case that the information record medium is loaded into the information record apparatus, or when the information is not continued to be stored into the record buffer, the calibration area can be effectively erased without affecting on the normal operation of recording the information.

Incidentally, the second erase device may be arranged to erase a part greater than the part of the calibration data to be erased by the first erase device, i.e. to erase the data so that some extent of the already recorded calibration data remains, not to erase the entire calibration data recorded in the calibration area.

In the aspect provided with the second erase device as mentioned above, the information record apparatus may be arranged so that the apparatus further comprises: a second judgement device for judging whether or not the second erase device should perform erasing, wherein the second erase device erases the entire calibration data, under a condition that the second judgement device judges that the erasing is to be performed.

In this arrangement, the second erase device can erase the calibration data as appropriate, on the basis of the judgement of the second judgement device. For example, it may be judged that the second erase device should erase, in a case that the workload of the recording of the information record apparatus is relatively smaller. Therefore, the calibration data is not erased unnecessarily, and thereby the process performance of the information record apparatus can be improved. For example, it may be judged that the second erase device should erase, in a case that the information record medium is loaded into the information record apparatus (i.e. in a case that the recording of the record device stops, or in a case that the information is not continued to be stored into the record buffer).

In the aspect provided with the second judgement device as mentioned above, the information record apparatus may be arranged so that the second judgment device judges that the second erase device should perform erasing, if a size of an empty area into which the calibration data is not recorded in the calibration area is smaller than a second threshold value, on loading the information record medium.

In this arrangement, the second erase device can perform the full-erase, in the case that the empty area is as small as a certain extent for example, depending on the empty area size in the calibration area. Therefore, the second erase device performs the full-erase in the case that the full-erase of the calibration data is truly required. The second erase device does not perform the full-erase, in the case that the empty area does not particularly require the full-erase of the calibration data. Thereby, the process performance can be improved, as mentioned above. However, since the full-erase by the second erase device generally involves the heavy workload of the information record apparatus, the second judgement device may preferably judge in consideration of a premise that the full-erase is performed when the workload of the information record apparatus is small may be included in the second judgement device.

As the second threshold value, a value corresponding to a size of a predetermined percentage (e.g. 20%, 30%) of the calibration area may be set, or a size enough to perform appropriately the operation of recording may be set, or a value based on the record speed or the record buffer size as mentioned below may be set.

In the aspect in which the second judgement device judges whether or not the empty area size is smaller than the second threshold value, the information record apparatus may be arranged so that the first erase device erases the part of the calibration data so as to obtain the empty area having a size corresponding to the second threshold value.

In this arrangement, for example as discussed in the following detailed description of the preferred embodiment, the erase by the first erase device during the recording (or before the start of the recording), and the erase by the second erase device after the information record medium is loaded, may be associated with each other, so that the empty area of the calibration area can be obtained more suitably and effectively.

In the aspect in which the second judgement device judges whether or not the empty area size is smaller than the second threshold value, the information record apparatus may be further provided with: a record buffer for temporarily storing record data to record the information; and a third set device for setting the second threshold value, on the basis of storage capacity of the record buffer.

In this arrangement, the second erase device can perform the erase operation to an extent not affecting on the normal operation of recording the information if the third set device sets the second threshold value in response to the storage capacity of the buffer (e.g. its size level) for example.

In the aspect provided with the third set device as mentioned above, the information record apparatus may be arranged so that the third set device sets the second threshold value, on the basis of a record speed when the information is recorded, instead of or in addition to the storage capacity of the record buffer.

In this arrangement, it is possible to judge whether or not the second erase device should perform the erase operation, on the basis of the second threshold value set in appropriately taking account of the information record speed that may affect on the operation of recording the information, instead of or in addition to the aforementioned record buffer size.

Alternatively, an external set device may be employed for setting from the outside at least one of the partial size of the calibration data to be erased by the first erase device, the first threshold and the second threshold. Thereby, the user of the information record apparatus of the present invention can set these conditions and obtain a record environment suitable to the user.

The above object of the present invention can be achieved by an information record method of the present invention comprising: a record process of recording information onto an information record medium with laser light having controllable record power; a calibration process of obtaining a calibration value of the record power by recording calibration data to obtain the calibration value, into a calibration area arranged in the information record medium to obtain the calibration value; and a first erase process of erasing a part of the calibration data recorded into the calibration area.

According to the information record method of the present invention, similarly to the information record apparatus of the present invention mentioned above, the calibration value of the record power can be obtained at the calibration process, and the information can be recorded with the record power relating to the calibration value at the record process. Then, a part of the calibration data recorded in the calibration area can be erased at the first erase process. Therefore, it is possible to obtain various benefits the aforementioned information record apparatus of the present invention has.

Incidentally, the information record method of the present invention may take various aspects, corresponding to various aspects of the information record apparatus of the invention.

The above object of the present invention can be achieved by an information record and reproduction apparatus comprising: an information record apparatus having: a record device for recording information onto an information record medium with laser light having controllable record power; a calibration device for obtaining a calibration value of the record power by recording calibration data to obtain the calibration value, into a calibration area arranged in the information record medium to obtain the calibration value; and a first erase device for erasing a part of the calibration data recorded into the calibration area; and a reproduction device for reproducing the information recorded on the information record medium.

According to the information record and reproduction apparatus of the present invention, the information record and reproduction apparatus can obtain various benefits provided by the information record apparatus of the present invention, and can further reproduce the information by using the reproduction device including the optical pickup, the RF detector and so on.

Particularly, in order to perform the recording and reproduction of the information, the storage capacity of the record buffer of this information record and reproduction apparatus mentioned below may become smaller than that of the information record apparatus. In the information record and reproduction apparatus of the present invention, however, the appropriate erase operation can be presented without affecting on the operation of recording the information, regardless of the buffer record capacity, by erasing a part of the calibration area.

Incidentally, the information record and reproduction apparatus of the present invention can take various aspects, corresponding to various aspects of the information record apparatus of the present invention discussed above.

The above object of the present invention can be achieved by an information record and reproduction method of the present invention comprising: an information record method having: a record process of recording information onto an information record medium with laser light having controllable record power; a calibration process of obtaining a calibration value of the record power by recording calibration data to obtain the calibration value, into a calibration area arranged in the information record medium to obtain the calibration value; and a first erase process of erasing a part of the calibration data recorded into the calibration area; and a reproduction process of reproducing the information recorded on the information record medium.

According to the information record and reproduction method of the present invention the information record and reproduction method can obtain various benefits provided by the information record method of the present invention mentioned above, and can further reproduce the information at the reproduction process using the operation of the optical pickup, the RF detector and so on.

Incidentally, the information record and reproduction method can take various aspects, corresponding to various aspects of the information record method of the present invention mentioned above.

The above object of the present invention can be achieved by a first computer product of the present invention in a computer-readable medium for a record control and for tangibly embodying a program of instructions executable by a computer disposed at an information record apparatus comprising: a record device for recording information onto an information record medium with laser light having controllable record power; a calibration device for obtaining a calibration value of the record power by recording calibration data to obtain the calibration value, into a calibration area arranged in the information record medium to obtain the calibration value; and a first erase device for erasing a part of the calibration data recorded into the calibration area, the program of instructions being for making the computer function as at least part of the record device, the calibration device and the first erase device.

According to the first program product of the present invention, the information record apparatus may be embodied relatively easily, by reading and running the first computer program product from a record medium, such as a ROM, a CD-ROM, a DVD-ROM, a hard disk and so on, storing the first computer program product therein/thereon, or by downloading the first computer program product to the computer via the communication device and running it.

Incidentally, the first computer program product of the present invention can take various aspects, corresponding to various aspects of the information record apparatus of the present invention mentioned above.

The above object of the present invention can be achieved by a second computer program product of the present invention in a computer-readable medium for a reproduction control and for tangibly embodying a program of instructions executable by a computer disposed at an information record and reproduction apparatus comprising: an information record apparatus having: a record device for recording information onto an information record medium with laser light having controllable record power; a calibration device for obtaining a calibration value of the record power by recording calibration data to obtain the calibration value, into a calibration area arranged in the information record medium to obtain the calibration value; and a first erase device for erasing a part of the calibration data recorded into the calibration area; and a reproduction device for reproducing the information recorded on the information record medium, the program of instructions being for making the computer function as at least part of the information record apparatus and the reproduction device.

According to the second computer program product of the present invention, the information record and reproduction apparatus may be embodied relatively easily, by reading and running the second computer program product from a record medium, such as a ROM, a CD-ROM, a DVD-ROM, a hard disk and so on, storing the second computer program product therein/thereon, or by downloading the second computer program product to the computer via the communication device and running it.

Incidentally, the second computer program product of the present invention can take various aspects, corresponding to various aspects of the information record and reproduction apparatus of the present invention mentioned above.

The aforementioned effects and other advantages of the present invention will be more apparent from the following explanation.

As discussed above, the information record apparatus or method of the invention is provided with: a record device; a calibration device and a control device, or provided with: a record process; a calibration process; and a first erase process. Therefore, it is possible to prevent the overflow of the record buffer and to perform appropriately the erase of the calibration data recorded in the calibration area.

Furthermore, the information record and reproduction apparatus, or method of the present invention is provided with: the information record apparatus of the invention; and a reproduction device, or provided with: the information record method of the invention; and a reproduction process. Therefore, it can obtain various benefits presented by the information record apparatus (or information record method), and can reproduce appropriately the information recorded onto the information record medium.

The nature, utility, and further features of this invention will be more clearly apparent from the following detailed description with reference to preferred embodiments of the invention when read in conjunction with the accompanying drawings briefly described below.
FIG. 1 is a view illustrating a fundamental structure of the optical disc as an example of the information recode medium used for the embodiment of the information record and reproduction apparatus of the present invention: a schematic plan view of the optical disc having a plurality of areas (upper part); and a schematic concept view of the area structure in a radius direction corresponding to the plan view (lower part).
FIG. 2 is a block diagram conceptually illustrating a fundamental construction of the embodiment of the information record and reproduction apparatus of the present invention.
FIG. 3 is a flow chart illustrating an entire operational flow of the first operation of the embodiment of the information record and reproduction apparatus of the present invention.
FIG. 4 is a view conceptually illustrating a data structure of the PCA, in the optical disc used for the embodiment of the information record and reproduction apparatus of the present invention.
FIG. 5 is a view conceptually illustrating a specific example of the PCA erase operation in the embodiment of the information record and reproduction apparatus of the present invention.
FIG. 6 is a view conceptually illustrating another specific example of the PCA erase operation in the embodiment of the information record and reproduction apparatus of the present invention.

Now, embodiments of the present invention will be discussed, with reference to drawings.

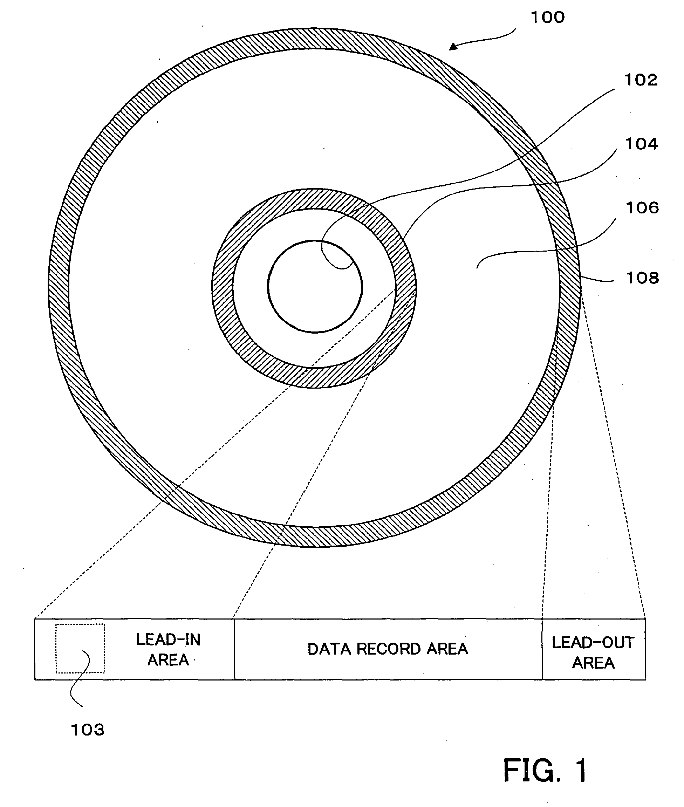

Firstly, with reference to FIG. 1, the information record medium used in an embodiment of the information record apparatus (the information record and reproduction apparatus) of the present invention will be discussed. In this embodiment, an explanation will be made for a rewritable optical disc as the information record medium. FIG. 1 illustrates, in the upper part, a structure of the optical disc having a plurality of areas in a plan view, and illustrates conceptually, in the lower part, an area structure in a radius direction.

As shown in FIG. 1, the optical disc 100 can be recorded in various record systems, such as a magnetooptical system and a phase change system, onto which it is possible to record (write) data (information) a plurality of times. A lead-in area 104, a data record area 106 and a lead-out area 108 are disposed from an inner circumference to an outer circumference around a center hole 102 on a record surface of a disc body having a diameter of about 12 cm similar to DVDs. Each area has groove tracks and land tracks alternately arranged spirally or concentrically around the center hole 102 for example. These groove tracks may be wobbled. Alternatively, pre-pits may be formed in one or both kinds of tracks. Incidentally, the present invention is not limited to the optical disc having these three areas. For example, it is possible to construct a file structure discussed below, even without the lead-in area 104 and the lead-out area 108. Furthermore, the lead-in area 104 and the lead-out area 108 may have a more divided structure.

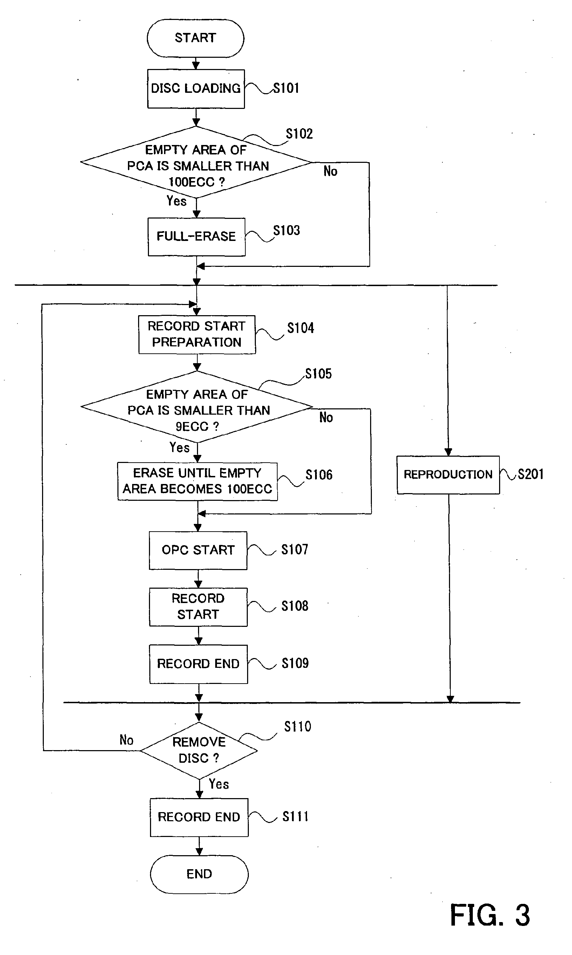

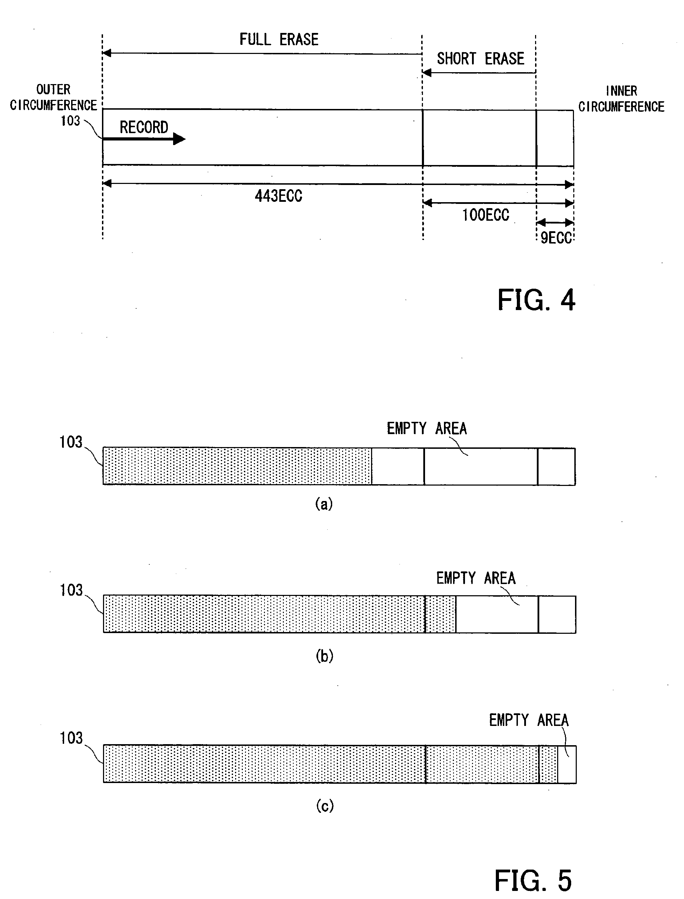

Particularly, a PCA (Power Calibration Area) 103 as an example of the "calibration area" of the present invention is disposed in the lead-in area 104. An OPC pattern is recorded into the PCA area 103 and an OPC process is performed in the PCA area 103, as discussed below (see FIG. 3 and FIG. 4).

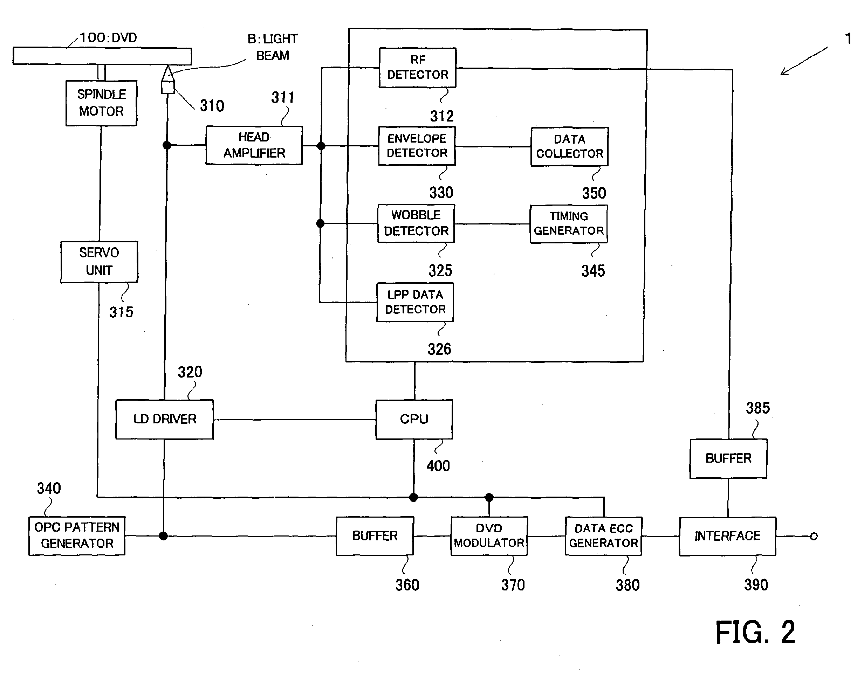

Next, with reference to FIG. 2 to FIG. 4, the embodiment of the information record and reproduction apparatus (information record apparatus) of the present invention will be discussed.

### (Embodiment of Information Record And Reproduction Apparatus)

### (1) Fundamental Structure

Firstly, a fundamental structure of the information record and reproduction apparatus in the example will be discussed, with reference to FIG. 2. FIG. 2 illustrates conceptually the fundamental structure of the information record and reproduction apparatus in the embodiment.

As shown in FIG. 2, the information record and reproduction apparatus 1 in the embodiment is provided with: a spindle motor 301; an optical pickup 310; a head amplifier 311; an RF detector 312; a servo unit 315; an LD driver 320; a wobble detector 325; an LPP data detector 326; an envelop detector 330; an OPC pattern generator 340; a timing generator 345; a data collector 350; a buffer 360; a DVD modulator 370; a data ECC generator 380; a buffer 385; an interface 390; and a CPU 400.

The spindle motor 301 is adapted to rotate the optical disc 100 at a predetermined speed under spindle servo control of the servo unit 315 and the like.

The optical pickup 310 is for recording the data onto the optical disc 100 or reproducing the data from the optical disc 100, and configured with a semiconductor laser device, various lenses, and an actuator and so on. More specifically, the optical pickup 310 modulates and irradiates light beam such as laser light onto the optical disc 100 with a first power as reading light for reproduction, and with a second power as writing light for recording. The optical pickup 310 is adapted to move in a radius direction of the optical disc 100 by the actuator, a slider and so on (not shown) driven by the servo unit 315.

The head amplifier 311 amplifies an output signal of the optical pickup 310 (i.e. reflection light of light beam B) and outputs the amplified signal. More specifically, an RF signal as the reading signal is outputted to the RF detector 312 and the envelope detector 330, and a push-pull signal is outputted to the wobble detector 325 and the LPP detector 326.

The RF detector 312 is adapted to output reproduction data to the outside via the buffer 385 and the interface 390 by detecting the RF signal and demodulating the detected signal. A predetermined content is reproduced at an external output device connected to the interface 390 (e.g. display device such as LCD and PDP, or a speaker).

The servo unit 315 moves an objective lens of the optical pickup 310 on the basis of a tracking error signal and a focus error signal obtained by processing the received light (reflection light) of the optical pickup 310. Thereby, it servo-controls the spindle motor 301, on the basis of a wobble signal obtained from a wobble of the wobbled groove track of the optical disc 100.

The LD driver 320 drives the semiconductor laser device disposed in the optical pickup 310 so as to determine the optimal record laser power by recording or reproducing the undermentioned OPC pattern at the undermentioned OPC process. Then, the LD driver 320 drives the semiconductor laser device disposed in the optical pickup 310 with the optimal record laser power determined by the OPC process on data recording. On the data recording, the light beam having the optimal record laser power is modulated depending on the record data.

Incidentally, a specific example of the "record device" of the present invention is configured including the aforementioned spindle motor 301, the optical pickup 310, the servo unit 315, and the LD driver 320 and so on.

The wobble detector 325 detects the push-pull signal indicating the wobble signal on the basis of the output signal corresponding to the amount of light received from the head amplifier 311. Furthermore, the wobble detector 325 outputs the detected signal to the timing generator 345.

The LLP data detector 326 is adapted to detect the push-pull signal indicating an LLP signal on the basis of the output signal corresponding to the amount of light received from the head amplifier 311. Furthermore, the LPP data detector 326 is adapted to detect the preformat address information as described later. Furthermore, the LPP data detector 326 outputs the preformat address information to the timing generator 345.

The envelop detector 330 is adapted to detect a peak value and a bottom value of an envelop detection of the RF signal as the output signal from the head amplifier 311 in order to determine the optimal record laser power, under control of the CPU 400, on reproducing the OPC pattern in the OPC process. The envelope detector 330 may be configured including an A/D converter (Analog/Digital converter) and the like.

The OPC pattern 340 is adapted to output a signal indicating the OPC pattern to the LD driver 320, on the basis of the timing signal from the timing generator 345, on recording the OPC pattern in the OPC process before recording.

The timing generator 340 detects absolute position information based on a management unit of preformat address information, on the basis of the preformat address information inputted from the LPP data detector 326 on recording the OPC pattern in the OPC process or on recording the data in the recording process. At the same time, on the basis of a period of the push-pull signal indicating the wobble signal, the timing generator 340 detects relative position information based on a slot unit (e.g. a slot unit corresponding to a length multiplied a natural number by one period of the wobble signal) smaller than the management unit of the preformat address information. Therefore, the timing generator 345 can identify the record start position, regardless whether or not the record start position in the OPC process (or the recording process) starts from the management unit of the preformat address information. Then, it generates and outputs the timing signal to write the OPC pattern (or the data), on the basis of the period of the push-pull signal indicating the wobble signal outputted from the wobble detector 325. On the other hand, the timing generator 345 can identify the reproduction start position on reproducing the OPC pattern in the OPC process (or the data in the reproducing process), similarly to the case of recording. Then, it generates and outputs the timing signal to sample the reproduced OPC pattern, on the basis of the period of the push-pull signal to indicate the wobble signal outputted from the wobble detector 325.

The data collector 350 is mainly a general memory. For example, it may be configured of an external RAM or the like. The envelope detection (or the peak value and the bottom value of the envelop detection) detected at the envelope detector 330 is stored in the data collector 350. The CPU 400 detects the optimal record laser power, i.e. performs the OPC process, on the basis of the stored envelope detection.

The buffer 360 is a specific example of the "record buffer" of the present invention, and adapted to store the record data modulated by the DVD modulator 370 and output the stored data to the LD driver 320.

The DVD modulator 370 is adapted to perform a DVD modulation for the record data, and output it to the buffer 360. As the DVD modulation, 8/16 Modulation or EFM (Eight to Fourteen Modulation) may be performed.

The data ECC generator 380 adds an error correct code (ECC) to the record data inputted via the interface 390. More specifically, the ECC is added to each predetermined block unit (e.g. ECC cluster unit) and outputted to the DVD modulator 370.

The buffer 385 stores the reproduction data outputted from the RF detector 312 and outputs it to the external output device via the interface 390.

The interface 390 receives the input such as the record data from the external input device and outputs it to the data ECC generator 380. Alternatively, it may be adapted to output the reproduction data outputted from the RF detector 312 to the external output device such as the speaker or the display

The CPU 400 sends commands to each devices such as the LD driver 320, the servo unit 315, in order to detect the optimal record laser power. That is, the CPU 400 controls entirely the information record and reproduction apparatus 1 by outputting the system command. Usually, software to operate the CPU 400 is stored in an inner or external memory.

Incidentally, it is needless to say that the information record and reproduction apparatus 1 shown in FIG. 2 functions as an information record apparatus capable of recording the data roughly due to the optical pickup 310, the LD driver 320, the buffer 360, the DVD modulator 370, the data ECC generator 380, and other constitutional elements, and functions as an information reproduction apparatus capable of reproducing the data roughly due to the optical pickup 310, the head amplifier 311, the RF detector 312 and other constitutional elements.

### (2) Fundamental Operation

Next, with reference to FIG. 3, a fundamental operation of the information record and reproduction apparatus in the embodiment will be discussed. FIG. 3 illustrates the fundamental operational flow of the information record and reproduction apparatus 1 in the embodiment.

In FIG. 3, firstly the optical disc 100 is loaded (step S101). If a profile measurement has not been performed, it may be performed on this occasion. The "profile measurement" means to set the light beam B for the optimal recording, for example by measuring an inclination of the optical disc 100 or the reflection light of the light beam B, in order to control the light beam B (i.e. to actuate an LC tilt function) according to variations in a thickness or warpage of the optical disc 100. Furthermore, the optical pickup 310 may perform a seek operation and obtain data about an address of the PCA 103 (e.g. address or the like of recorded part or unrecorded part).

Next, the CPU 400 as a specific example of the "second judgement device" of the present invention judges whether or not a size of an empty area of the PCA 103 is smaller than 100 ECC cluster as a specific example of the "second threshold value" of the present invention (step S102). For example, the judgement may be made on the basis of the address of the PCA 103 obtained by the seek operation of the optical disc 100 performed on the disc loading at step S101, or may be performed on the basis of the address of the PCA 103 obtained by the seek operation newly performed at step S102.

Incidentally, the judgement basis, "100 ECC cluster" may be a cluster size of about 20 per cent relative to a total storage capacity of the PCA 103. Therefore, this numerical value is not fixed value and may be varied as appropriate.

As the result of the judgement, if it is judged that the size of the empty area is not smaller than the 100 ECC cluster (step S102: No), the OPC process is performed as the calibration of the record laser power. On the other hand, if it is judged that the size of the empty area is smaller than the 100 ECC cluster (step S102: Yes), an erase operation is performed for an entire PCA 103 (i.e. full erase) (step S103). That is, all the OPC pattern recorded in the PCA 103 is deleted so that further OPC pattern can be recorded. More specifically, under control of the CPU 400, the laser power of the optical pickup 310 is controlled by an operation of the LD driver 320 to irradiate the light beam B onto a part where the OPC pattern is to be erased, so that the erase is performed. The laser power at this time is generally smaller than that in recording. A specific example of the "second erase device" of the present invention is configured including the LD driver 320, the optical pickup 310 and so on.

Now, a more detailed explanation will be made to the OPC process. Firstly, under control of the CPU 400, the optical pickup 310 is moved to the PCA 103 disposed in the lead-in area 104. Then, under control of the OPC pattern generator 340 and the LD driver 320, the record laser power is changed sequentially and stepwisely (e.g. 16 stages different to each other) and the OPC pattern as a specific example of the "calibration data" of the present invention is recorded in the PCA 103. The OPC pattern may be a record pattern in which a short pit corresponding to 3T pulse and a long pit corresponding to 11T pulse are alternately formed with the same length of their non-record section, respectively.

The LD driver 320 drives the semiconductor laser device in the optical pickup 310 so as to change or switch the record laser power sequentially and stepwisely on the basis of the OPC pattern outputted from the OPC pattern generator 340.

Furthermore, after recording the OPC pattern onto the PCA 103 is completed, the recorded OPC pattern is reproduced at the PCA 103, under control of the CPU 400. Then, on the basis of the RF signal inputted into the envelope detector 330, the peak value and the bottom value in the envelope detection of the RF signal are sampled and outputted to the data collector 350. Then, under control of the CPU 400, these peak and bottom values are stored into the data collector 350. Then, after the reproduction of such an OPC pattern is performed repeatedly in one OPC process, for example in respect to the number of times in the recorded OPC pattern, the optimal laser power (i.e. a specific example of the "calibration value" of the present invention) is determined. That is, the optimal record laser power is calculated to minimize an asymmetry obtained from the peak and bottom values.

Then, the operation of recording the data is prepared (step S104). More specifically, under control of the CPU 400 for example, the optical pickup 310 performs the seek operation to obtain various management data (e.g. file system information, strategy of record laser, etc.) necessary for recording onto or reproduction from the optical disc 100. On the basis of the management data, under control of the CPU 400, in response to an instruction via the external input device or the like for example, the data recording onto the optical disc 100 is performed via the interface 390.

At this stage, the CPU 400 as an example of the "first judgement device" of the present invention judges whether or not the size of the empty area of the PCA 103 is smaller than 9ECC cluster as an example of the" first threshold" of the present invention (step S105). In this case, the judgement may be made on the basis of the PCA address obtained by the seek operation of the optical disc 100 performed on the disc loading at step S101, or by the seek operation newly performed relative to the area of the PCA 103 at step 105.

Incidentally, the judgement basis, "9ECC cluster" is a cluster size enough to perform at least one time of the OPC process, in the case that at least "2ECC cluster" is required to record one OPC pattern for example. Therefore, this value is not fixed, and may be varied as appropriate.

As the result of this judgement, if it is judged that the size of the empty area is not smaller than 9ECC cluster (step S105: No), the OPC process is performed as the calibration of the record laser power (step S107). On the other hand, if it is judged that the size of the empty area is smaller than 9ECC cluster (step S105: Yes), a partial erase operation (i.e. a short erase operation) is performed to obtain the empty area of 100 ECC cluster in the PCA 103 (step S106). That is, a part of the OPC pattern recorded on/in the PCA 103 is erased, so that re-recording the OPC pattern can be performed in the erased part. Also in this case, the OPC pattern is erased by an example of the "first erase device" of the present invention configured including the LD driver 320 and the optical pickup 31.

Then, the OPC process is performed (step S107). However, the OPC process at step S107 is not necessary, if it is immediately after the OPC operation on loading the optical disc 100. That is, the OPC process at step S107 is a process mainly for performing the calibration of the record laser power again after a certain volume of data is recorded, after the optical disc 100 is loaded.

Then, recording the data is started, under control of the CPU 400 (step S108). More specifically, the optical pickup 310 is moved to the record area (e.g. the data record area 106 shown in FIG. 1, etc.) and then the light beam is modulated in response to the data to be recorded with the record laser power determined at step S107 (i.e. the optimal record laser power), under control of the LD driver 320 or the like, and thereby the data is recorded onto the record area. That is, the record pits are formed on the tracks in response to the data.

Then, the record operation ends (step S109). At this stage, it is judged whether or not the optical disc 100 is to be ejected from the information record and reproduction apparatus 1 (i.e. to be unloaded), under control of the CPU 400 (step S110). For example, if the user of the information record and reproduction apparatus 1 instructs the disc ejection via an operation button or the like, or if a whole of a desired contents date is appropriately recorded, the CPU 400 may judge that the optical disc 100 is to be ejected.

As the result of this judgement, if it is judged that the optical disc 100 is to be ejected (step S110: Yes), the optical disc 100 is ejected and recording the data is ends (step S111). On the other hand, if it is judged that the optical disc 100 is not to be ejected (step S110: No), the process flow goes back to step S104 to record the data if needed.

The data reproduction may be performed while the data recording is performed from step S104 to step S109 (step S201).

As discussed above, the recording and reproduction of the information record and reproduction apparatus 1 of the present invention is performed. Since the normal operation of recording the data is temporarily stopped while the PCA 103 is subjected to the erase operation, the data inputted from the external input device via the interface 390 is sequentially and continuously stored into the buffer 360. However, since the storage capacity of the buffer 360 is predetermined, a buffer overflow may be occurred. In this embodiment, however, it is possible to perform the full erase operation relative to the entire PCA 103, or perform the short erase operation relative to a part of the PCA 103, depending on the size of the empty area of the PCA103. Therefore, performing the partial erase operation (short erase operation) makes it possible to shorten a time length to temporarily stop the normal operation of recording the data, and thereby to effectively prevent the inconvenience such as the buffer overflow. The PCA 103 can be full-erased, by performing the full erase operation, for example in the case of loading the optical disc 100, and in the case that the record data is not continued to be stored into the buffer (i.e. in the case that the process performance has a margin, or the buffer 360 has a margin).

Therefore, the information record and reproduction apparatus 1 of the present invention can shorten the time length to temporarily stop the normal operation of recording the data, in comparison to another information record and reproduction apparatus capable of performing the full erase only relative to the PCA 103. Thereby, it has a great advantage to effectively prevent the inconvenience such as the buffer overflow. Furthermore, in this embodiment, the judgement basis for the full erase operation (i.e. a value of "100ECC cluster") is also relatively greater so that a time length required for the full erase operation is shortened. Nevertheless, the judgement basis according to the present invention may be set relatively smaller (e.g. 50ECC cluster, etc.)

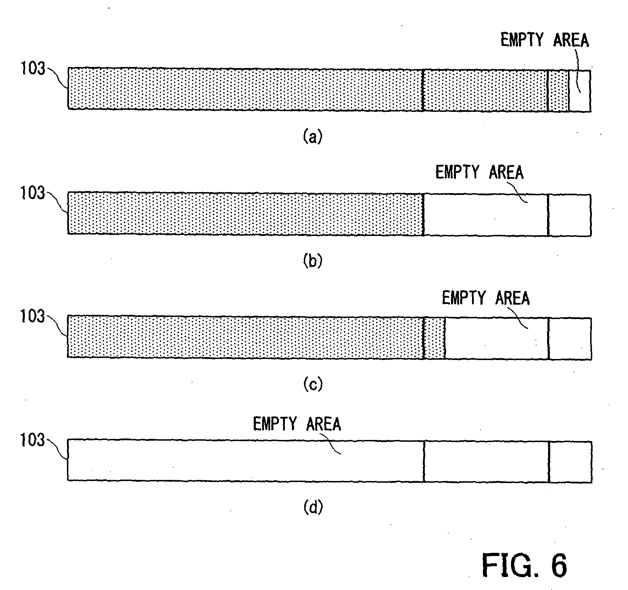

Now, with reference to FIG. 4 to FIG. 6, the PCA 103 and the erase operation will be discussed. FIG. 4 conceptually illustrates a data structure of the PCA 103. FIG. 5 illustrates a specific recording of the PCA 103. FIG. 6 conceptually illustrates the erase operation relative to the PCA 103.

As shown in FIG. 4, in this embodiment, the PCA 103 has a cluster size of 443ECC cluster. The OPC pattern is recorded from the left side in the figure (i.e. from the outer circumference of the optical disc 100), and thereby the empty area becomes smaller. If the empty area is smaller than 100ECC cluster at step S102, the full erase operation is performed so that the entire 443ECC cluster becomes the empty area. On the other hand, if the empty area is smaller than 9ECC cluster at step S106 in FIG. 3, the short erase operation is performed so as to obtain the empty area of 100ECC cluster.

An explanation is made using a more specific example. As shown in FIG. 5 (a), if the optical disc 100 has the empty area of the PCA 103 (i.e. a colorless area in the figure) having the size being greater than 100ECC cluster, the erase operation for the PCA 103 is not performed on loading thereof nor on recording.

On the other hand, as shown in FIG. 5 (b), if the optical disc 100 has the empty area of the PCA 103 having the size being smaller than 100ECC cluster, the erase operation for the entire PCA 103 is performed on loading thereof, so that the entire PCA 103 (i.e. 443ECC cluster) becomes the empty area. However, as for the optical disc 100 shown in FIG. 5 (b), the erase operation (the full erase operation and the short erase operation) for the PCA 103 is not performed during the recording.

On the other hand, as shown in FIG. 5 (c), the optical disc 100 has the empty area of the PCA 103 having the size being smaller than 9ECC cluster, the erase operation (the full erase operation) for the entire PCA 103 is performed on loading thereof. Alternatively, the erase operation (the partial erase operation) is performed for the part of the PCA 103 on recording the data so as to obtain the empty area of 100ECC cluster.

Incidentally, the size of the empty area of the PCA 103 after performing the partial erase operation at step S106 becomes 100ECC cluster, which is the same value as the judgement basis at step S102. For example, the empty area of the PCA 103 is smaller than 9ECC cluster, as shown in FIG. 6 (a), the partial erase operation for the PCA 103 is performed (step S106 in FIG. 3). As the result, the empty area of 100ECC cluster is obtained, as shown in FIG. 6 (b). Then, since the OPC process is performed (step S107 in FIG. 3), the empty area of the PCA 103 is smaller than 100ECC cluster, as shown in FIG. 6 (c). Therefore, if the optical disc 100 is ejected at this time (step S111 in FIG. 3), and then re-loaded (step S101 in FIG. 3), the erase operation for the entire PCA 103 (the full erase operation) must be performed, as shown in FIG. 6 (d) (step S103 in FIG. 3). That is, conforming the empty area after the partial erase operation at step S106 to the empty area to be the judgement basis at step S102 in their size makes it possible to advantageously perform the full erase operation for the PCA 103, on loading the optical disc 100 when the buffering for the record data is not performed. Nevertheless, even if these empty area sizes are different to each other, various benefits of the information record and reproduction apparatus 1 in this embodiment can be obtained.

A value "100ECC cluster", which becomes a size of the empty area to be obtained by the erase operation (the partial erase operation) at step S106 or becomes the judgement basis at step S102, or a value "9ECC cluster", which becomes the judgement basis at step S105 may be changed as appropriate. This change may be achieved by the operation of the CPU 400 as an example of the "first, second and third set device" of the present invention, or may be achieved by the user's instruction inputted via a remote controller or an operation button, etc.

For example, in the case that the change is automatically achieved by the operation of the CPU 400, the change may be made on the basis of the buffer size 360 (or data size recorded in the buffer 360) or the record speed (or a type of the optical disc 100, etc.) so as to obtain the appropriate value.

For example, greater the storage capacity of the buffer 360 (or smaller the data volume stored in the buffer 360), more the data capable of being temporarily stored into the buffer 360. For this, a time length to temporarily stop the normal operation of recording the data for the erase operation becomes longer. Therefore, the area of the PCA 103 to be partially erased at step S106 in FIG. 3 can be increased, if the storage capacity of the buffer 360 is increased. For example, 200ECC cluster in the PCA 103 may be erased, because if the storage capacity of the buffer 360 becomes twice, a time length to stop temporarily the recording becomes twice. In response to this, the judgement basis at step S102 in FIG. 3 may be 200ECC cluster. Alternatively, since the time length to stop temporarily the recording increases, it is estimated that the buffer overflow hardly occurs even if a time length of performing the full erase operation at step S103 in FIG. 3 increases. Therefore, the number of times to perform the full erase operation can be reduced even though the time length of performing the full erase operation is elongated, by setting the judgement basis at step S102 in FIG. 3 to "50ECC cluster" (i.e. by making the judgement basis severe) for example.

On the other hand, if the storage capacity of the buffer 360 is smaller (or the data volume to be stored into the buffer 360 increases), the change may be achieved in a manner opposite to the aforementioned case. For example, the area of the PCA 103 to be partially erased may be smaller, or the judgement basis may be set "300ECC cluster" in order to shorten the time length of performing the full erase operation (i.e. the judgement basis may be alleviated).

On the other hand, if the record speed to the optical disc 100 becomes faster, the erase operation time required to obtain the same size of the empty area becomes shorter. For example, if the record speed becomes twice (e.g. a light beam B irradiation range becomes twice per predetermined time length), the erase operation time required to obtain 100ECC cluster of the empty area becomes about a half. Therefore, the twice empty area (e.g. 200ECC cluster of the empty area) may be obtained, on the partial erase operation at step S106, in order to reduce the number of times to perform the partial erase operation. More specifically, it is assumed that the buffer 360 has the storage capacity capable of storing the data whose size is equal to the size of the data recorded by the recording operation for one second in a DVD double speed mode for example. And it is assumed that the PCA size capable of being erased for this one second corresponds to 100ECC cluster. In this case, the PCA size capable of being erased for one second, which is a time length the buffer 360 can temporarily store the data, becomes about twice (i.e. the order of 200ECC cluster) in a DVD quadruple mode. Namely, in the case that the record speed becomes relatively faster, the judgement basis at step S102 may be smaller in order to reduce the number of times to perform the full erase operation, or the area of the PCA 103 to be partially erased may be greater in order to reduce the number of times to perform the partial erase operation, or the judgement basis at step S105 may be smaller in order to reduce the number of times to perform the partial erase operation. By this means also, the buffer overflow can be prevented, because the time length to temporarily stop the recording does not change. Furthermore, a value, "9ECC cluster" to become the judgement basis at step S105 may be smaller (e.g. 5ECC cluster).

On the other hand, if the record speed to the optical disc 100 becomes slower, the change may be achieved in a manner opposite to the aforementioned case. For example, the change may be achieved so that the empty area to be obtained on the partial erase operation becomes smaller (e.g. 50ECC cluster) in order to prevent the buffer overflow. Furthermore, a value, "9ECC cluster", to become the judgement basis at step S105 may be greater (e.g. 12ECC cluster) in order to prevent the buffer overflow. Furthermore, a value, "100ECC cluster", to become the judgement basis at step S102 may be shorter (e.g. 50ECC cluster) in order to prevent the buffer overflow.

In the aforementioned example, the optical disc 100 is explained as an example of the information record medium, and the player and recorder for the optical disc 100 are explained as an example of the information record apparatus (the information record and reproduction apparatus). Nevertheless, the present invention is not limited to the optical disc, and the player and recorder for the optical disc. The present invention is applicable to various information record medium capable of high density recording or allowing high transfer rate, as well as the player and recorder for the various media.

## Claims

1. An information record apparatus (1) **characterized in that** said information record apparatus comprises:
a record device (310) for recording information onto an information record medium (100) with laser light having controllable record power;
a calibration device (340) for obtaining a calibration value of the record power by recording calibration data to obtain the calibration value, into a calibration area (103) arranged in the information record medium (100) to obtain the calibration value; and
a first erase device (320) for erasing a part of the calibration data recorded into the calibration area (103).

2. The information record apparatus (1) according to claim 1, **characterized in that** said information record apparatus further comprises:
a record buffer (360) for temporarily storing record data to record the information; and
a first set device (400) for setting a size of the part of the calibration data to be erased by the first erase device (320), on the basis of storage capacity of the record buffer (360).

3. The information record apparatus (1) according to claim 2, **characterized in that**
the first set device (400) sets the size of the part of the calibration data to be erased by the first erase device (320), on the basis of a record speed when the information is recorded, instead of or in addition to the storage capacity of the record buffer (360).

4. The information record apparatus (1) according to any one of claims 1 to 3, **characterized in that** said information record apparatus further comprises:
a first judgement device (400) for judging whether or not erasing is to be performed by the first erase device (320), wherein
the first erase device (329) erases the part of the calibration data, under a condition that the first judgement device (400) judges that the erasing is to be performed.

5. The information record apparatus (1) according to claim 4, **characterized in that**
the first judgement device (400) judges that the first erase device (320) should perform erasing, if a size of an empty area into which the calibration data is not recorded in the calibration area (103) is smaller than a first threshold value, on recording the information.

6. The information record apparatus (1) according to claim 5, **characterized in that** said information record apparatus further comprises:
a record buffer (360) for temporarily storing record data to record the information; and
a second set device (400) for setting the first threshold value, on the basis of a storage capacity of the record buffer (360).

7. The information record apparatus (1) according to claim 6, **characterized in that**
the second set device (400) sets the first threshold value, on the basis of a record speed when the information is recorded, instead of or in addition to the storage capacity of the record buffer (360).

8. The information record apparatus (1) according to any one of claims 1 to 7, **characterized in that** said information record apparatus further comprises:
a second erase device (320) for erasing the entire calibration data recorded into the calibration area (103).

9. The information record apparatus (1) according to claim 8, **characterized in that** said information record apparatus further comprises:
a second judgement device (400) for judging whether or not the second erase device (320) should perform erasing, wherein
the second erase device (320) erases the entire calibration data, under a condition that the second judgement device (400) judges that the erasing is to be performed.

10. The information record apparatus (1) according to claim 9, **characterized in that**
the second judgment device (400) judges that the second erase device (320) should perform erasing, if a size of an empty area into which the calibration data is not recorded in the calibration area (103) is smaller than a second threshold value, on loading the information record medium (100).

11. The information record apparatus (1) according to claim 10, **characterized in that**
the first erase device (320) erases the part of the calibration data so as to obtain the empty area having a size corresponding to the second threshold value.

12. The information record apparatus (1) according to claim 10, **characterized in that** said information record apparatus further comprises:
a record buffer (360) for temporarily storing record data to record the information; and
a third set device (400) for setting the second threshold value, on the basis of storage capacity of the record buffer (360).

13. The information record apparatus (1) according to claim 12, **characterized in that**
the third set device (400) sets the second threshold value, on the basis of a record speed when the information is recorded, instead of or in addition to the storage capacity of the record buffer (360).

14. An information record method **characterized in that** said information record method comprises:
a record process of recording information onto an information record medium (100) with laser light having controllable record power;
a calibration process of obtaining a calibration value of the record power by recording calibration data to obtain the calibration value, into a calibration area (103) arranged in the information record medium (100) to obtain the calibration value; and
a first erase process of erasing a part of the calibration data recorded into the calibration area (103).

15. An information record and reproduction apparatus (1) **characterized in that** said information record and reproduction apparatus comprises:
a record device (310) for recording information onto an information. record medium (100) with laser light having controllable record power;
a calibration device (340) for obtaining a calibration value of the record power by recording calibration data to obtain the calibration value, into a calibration area (103) arranged in the information record medium (100) to obtain the calibration value;
a first erase device (320) for erasing a part of the calibration data recorded into the calibration area (103); and
a reproduction device (310) for reproducing the information recorded on the information record medium (100).

16. An information record and reproduction method **characterized in that** said information record and reproduction method comprises:
a record process of recording information onto an information record medium (100) with laser light having controllable record power;
a calibration process of obtaining a calibration value of the record power by recording calibration data to obtain the calibration value, into a calibration area (103) arranged in the information record medium (100) to obtain the calibration value;
a first erase process of erasing a part of the calibration data recorded into the calibration area (103); and
a reproduction process of reproducing the information recorded on the information record medium (100).

17. A computer program in a computer-readable medium for a record control and for tangibly embodying a program of instructions executable by a computer disposed at an information record apparatus (1) comprising: a record device (310) for recording information onto an information record medium (100) with laser light having controllable record power; a calibration device (340) for obtaining a calibration value of the record power by recording calibration data to obtain the calibration value, into a calibration area (103) arranged in the information record medium (100) to obtain the calibration value; and a first erase device (320) for erasing a part of the calibration data recorded into the calibration area (103), **characterized in that**
the program of instructions being for making the computer function as at least part of the record device (310), the calibration device (340) and the first erase device (320).

18. A computer program in a computer-readable medium for a reproduction control and for tangibly embodying a program of instructions executable by a computer disposed at an information record and reproduction apparatus (1) comprising: a record device (310) for recording information onto an information record medium (100) with laser light having controllable record power; a calibration device (340) for obtaining a calibration value of the record power by recording calibration data to obtain the calibration value, into a calibration area (103) arranged in the information record medium (100) to obtain the calibration value; and a first erase device (320) for erasing a part of the calibration data recorded into the calibration area (103); and a reproduction device (310) for reproducing the information recorded on the information record medium (100), **characterized in that**
the program of instructions being for making the computer function as at least part of he record device (310), the calibration device (340), The first erase device (320) and the reproduction device (310).
